# EUROPEAN PATENT APPLICATION

(11) **EP 4 694 332 A1**
(43) Date of publication of application: **11.02.2026**
(21) Application number: 24784178.6
(22) Date of filing: 29.03.2024
(51) Int. Cl.: H04W 36/00

(54) **MEASUREMENT METHOD AND COMMUNICATION APPARATUS**

(30) Priority: 07.04.2023 CN 202310385352
(71) Applicant: Huawei Technologies Co., Ltd., Shenzhen, Guangdong 518129 (CN)
(72) Inventor: XIAO, Xinlong, Shenzhen, Guangdong 518129 (CN); WEI, Jingxin, Shenzhen, Guangdong 518129 (CN); ZHANG, Li, Shenzhen, Guangdong 518129 (CN)
(74) Representative: Körber, Martin Hans
(86) International application number: PCT/CN2024/084693
(87) International publication number: WO 2024/208093

(57) **Abstract**

This application provides a measurement method and a communication apparatus, to shorten an intra-frequency measurement periodicity and reduce a result reporting delay for intra-frequency measurement, thereby improving mobility handover performance of a terminal device. The method includes: The terminal device sends first capability information to a network device, and obtains resource configuration information for a first synchronization signal block measurement timing configuration SMTC and resource configuration information for a network controlled small gap NCSG, where the first capability information indicates that the terminal device supports performing intra-frequency measurement without measurement gap in a measurement period of the NCSG. When a part or all of measurement opportunities of the first SMTC are covered by the measurement period of the NCSG, the terminal device may perform intra-frequency measurement without measurement gap based on a first intra-frequency measurement periodicity. The first intra-frequency measurement periodicity is determined based on at least a periodicity of the first SMTC, a first scaling factor, and a second scaling factor, and the first scaling factor and the second scaling factor are 1.

## Description

### CROSS-REFERENCE TO RELATED APPLICATIONS

This application claims priority to Chinese Patent Application No. 202310385352.2, filed with the China National Intellectual Property Administration on April 7, 2023 and entitled "MEASUREMENT METHOD AND COMMUNICATION APPARATUS", which is incorporated herein by reference in its entirety.

### TECHNICAL FIELD

This application relates to the field of communication technologies, and in particular, to a measurement method and a communication apparatus.

### BACKGROUND

Due to mobility of a terminal device, the terminal device may move from a coverage area of one cell to a coverage area of another cell. To ensure service continuity and communication quality of the terminal, the terminal performs cell reselection (reselection) or cell handover (handover). Both cell reselection and cell handover require the terminal device to perform cell measurement, that is, the terminal device performs radio resource management (radio resource management, RRM) measurement.

An RRM measurement resource configured by a network includes a measurement resource with measurement gap (gap) and a measurement resource without gap. For example, the measurement gap is a network controlled small gap (network controlled small gap, NCSG), and the terminal device may perform inter-frequency RRM measurement within the NCSG. The measurement resource without gap is an SSB measurement timing configuration (SSB measurement timing configuration, SMTC), and the terminal device may perform intra-frequency RRM measurement within the SMTC.

Currently, when a resource configuration of the SMTC conflicts with a resource configuration of the NCSG in terms of time, an SMTC-based intra-frequency RRM measurement periodicity is usually prolonged. As a result, a result reporting delay for intra-frequency measurement is increased. Consequently, mobility handover performance of the terminal device is reduced.

### SUMMARY

This application provides a measurement method and a communication apparatus, to shorten an intra-frequency measurement periodicity and reduce a result reporting delay for intra-frequency measurement, thereby improving mobility handover performance of a terminal device.

According to a first aspect, an embodiment of this application provides a measurement method. The method may be applied to a terminal device and includes: sending first capability information, where the first capability information indicates that the terminal device supports performing intra-frequency measurement without measurement gap in a measurement period of a network controlled small gap NCSG; obtaining resource configuration information for a first synchronization signal block measurement timing configuration SMTC and resource configuration information for the NCSG; and when a part or all of measurement opportunities of the first SMTC are covered by the measurement period of the NCSG, performing intra-frequency measurement without measurement gap based on a first intra-frequency measurement periodicity, where the first intra-frequency measurement periodicity is determined based on at least a periodicity of the first SMTC, a first scaling factor, and a second scaling factor, and the first scaling factor and the second scaling factor are 1.

In the foregoing design, a value of a scaling factor used to calculate an intra-frequency measurement periodicity is defined, to shorten an intra-frequency measurement periodicity in a corresponding scenario, and reduce a result reporting delay for intra-frequency measurement, thereby improving mobility handover performance of the terminal device.

In a possible design, the intra-frequency measurement without measurement gap that is indicated in the first capability information includes intra-frequency measurement corresponding to a primary component carrier, and the first SMTC is an SMTC for the primary component carrier. For example, the first capability information includes an IntraMeasInNCSG capability identifier, used to report a capability of the terminal device simultaneously performing NCSG-based measurement and SMTC-based intra-frequency measurement on a PCC.

In a possible design, the intra-frequency measurement without measurement gap that is indicated in the first capability information further includes intra-frequency measurement corresponding to a secondary component carrier. For example, the first capability information includes an SCCMeasInNCSG capability identifier, used to report a capability of the terminal device simultaneously performing NCSG-based measurement and SMTC-based intra-frequency measurement on an SCC.

In a possible design, the method further includes: sending second capability information, where the second capability information indicates a quantity M of radio frequency channels simultaneously measurable by the terminal device, and M is a positive integer greater than or equal to 2. For example, the second capability information includes a MeasChanNumInNCSG capability identifier, and a value of the MeasChanNumInNCSG capability identifier is M.

In the foregoing design, the capability identifiers of the terminal device are uniformly defined, to facilitate information exchange between the terminal device and a network device.

In a possible design, when M is greater than 2, the method further includes: obtaining resource configuration information for a second SMTC, where the second SMTC is an SMTC for one of N secondary component carriers, and N is a positive integer; and when a part or all of measurement opportunities of the second SMTC are covered by the measurement period of the NCSG, performing intra-frequency measurement without measurement gap based on a second intra-frequency measurement periodicity, where the second intra-frequency measurement periodicity is determined based on at least a periodicity of the second SMTC, a third scaling factor, and a fourth scaling factor, the third scaling factor is 1, and the fourth scaling factor is determined based on N and M. For example, when M is 3, a value of the fourth scaling factor is N.

In a possible design, when M is equal to 2, the method further includes: obtaining resource configuration information for a second SMTC, where the second SMTC is an SMTC for one of N secondary component carriers, and N is a positive integer; and when a part of measurement opportunities of the second SMTC are covered by the measurement period of the NCSG, performing intra-frequency measurement without measurement gap based on a third intra-frequency measurement periodicity, where the third intra-frequency measurement periodicity is determined based on at least a periodicity of the second SMTC, a fifth scaling factor, and a sixth scaling factor, the fifth scaling factor is determined based on the periodicity of the second SMTC and a periodicity of the NCSG, and the sixth scaling factor is N; or when all of measurement opportunities of the second SMTC are covered by the measurement period of the NCSG, performing intra-frequency measurement without measurement gap based on a fourth intra-frequency measurement periodicity, where the fourth intra-frequency measurement periodicity is determined based on at least a periodicity of the second SMTC, a seventh scaling factor, and an eighth scaling factor, the seventh scaling factor is 1, and the eighth scaling factor is determined based on N and a quantity of measurement frequencies for the NCSG.

In the foregoing design, a value of a scaling factor used to calculate an intra-frequency measurement periodicity for the SCC is defined, to shorten an intra-frequency measurement periodicity for the SCC in a corresponding scenario, and reduce a result reporting delay for intra-frequency measurement on the SCC, thereby improving mobility handover performance of the terminal device.

In a possible design, the method further includes: receiving first indication information, where the first indication information indicates that the terminal device is allowed to perform the intra-frequency measurement without measurement gap in the measurement period of the NCSG. In this design, a network side can flexibly control whether the terminal performs measurement based on a capability of the terminal.

In a possible design, the method further includes: performing data transmission with a serving cell in the measurement period of the NCSG, where a frequency at which the serving cell is located is in a frequency range FR1.

In a possible design, the method further includes: performing data transmission with a serving cell in the measurement period of the NCSG based on intra-frequency scheduling restriction information corresponding to a frequency range FR2, where a frequency at which the serving cell is located is in the FR2.

In the foregoing design, NCSG-based measurement and uplink and downlink data transmission are simultaneously performed, so that impact of the measurement on a service of the terminal can be reduced, and throughput and communication performance of the terminal can be improved.

According to a second aspect, an embodiment of this application provides a measurement method. The method may be applied to a network side like a network device, and includes: receiving first capability information, where the first capability information indicates that a terminal device supports performing intra-frequency measurement without measurement gap in a measurement period of a network controlled small gap NCSG; sending resource configuration information for a first synchronization signal block measurement timing configuration SMTC and resource configuration information for the NCSG; and when a part or all of measurement opportunities of the first SMTC are covered by the measurement period of the NCSG, receiving a first measurement result, where the first measurement result is a result of intra-frequency measurement without measurement gap that is performed based on a first intra-frequency measurement periodicity, the first intra-frequency measurement periodicity is determined based on at least a periodicity of the first SMTC, a first scaling factor, and a second scaling factor, and the first scaling factor and the second scaling factor are 1.

In a possible design, the intra-frequency measurement without measurement gap that is indicated in the first capability information includes intra-frequency measurement corresponding to a primary component carrier, and the first SMTC is an SMTC for the primary component carrier. For example, the first capability information includes an IntraMeasInNCSG capability identifier, used to report a capability of the terminal device simultaneously performing NCSG-based measurement and SMTC-based intra-frequency measurement on a PCC.

In a possible design, the intra-frequency measurement without measurement gap that is indicated in the first capability information further includes intra-frequency measurement corresponding to a secondary component carrier. For example, the first capability information includes an SCCMeasInNCSG capability identifier, used to report a capability of the terminal device simultaneously performing NCSG-based measurement and SMTC-based intra-frequency measurement on an SCC.

In a possible design, the method further includes: receiving second capability information, where the second capability information indicates a quantity M of radio frequency channels simultaneously measurable by the terminal device, and M is a positive integer greater than or equal to 2. For example, the second capability information includes a MeasChanNumInNCSG capability identifier, and a value of the MeasChanNumInNCSG capability identifier is M.

In a possible design, when M is greater than 2, the method further includes: sending resource configuration information for a second SMTC, where the second SMTC is an SMTC for one of N secondary component carriers, and N is a positive integer; and when a part or all of measurement opportunities of the second SMTC are covered by the measurement period of the NCSG, receiving a second measurement result, where the second measurement result is a result of intra-frequency measurement without measurement gap that is performed based on a second intra-frequency measurement periodicity, the second intra-frequency measurement periodicity is determined based on at least a periodicity of the second SMTC, a third scaling factor, and a fourth scaling factor, the third scaling factor is 1, and the fourth scaling factor is determined based on N and M. For example, when M is 3, a value of the fourth scaling factor is N.

In a possible design, when M is equal to 2, the method further includes: sending resource configuration information for a second SMTC, where the second SMTC is an SMTC for one of N secondary component carriers, and N is a positive integer; and when a part of measurement opportunities of the second SMTC are covered by the measurement period of the NCSG, receiving a third measurement result, where the third measurement result is a result of intra-frequency measurement without measurement gap that is performed based on a third intra-frequency measurement periodicity, the third intra-frequency measurement periodicity is determined based on at least a periodicity of the second SMTC, a fifth scaling factor, and a sixth scaling factor, the fifth scaling factor is determined based on the periodicity of the second SMTC and a periodicity of the NCSG, and the sixth scaling factor is N; or when all of measurement opportunities of the second SMTC are covered by the measurement period of the NCSG, receiving a fourth measurement result, where the fourth measurement result is a result of intra-frequency measurement without measurement gap that is performed based on a fourth intra-frequency measurement periodicity, the fourth intra-frequency measurement periodicity is determined based on at least a periodicity of the second SMTC, a seventh scaling factor, and an eighth scaling factor, the seventh scaling factor is 1, and the eighth scaling factor is determined based on N and a quantity of measurement frequencies for the NCSG.

In a possible design, the method further includes: sending first indication information, where the first indication information indicates that the terminal device is allowed to perform intra-frequency measurement without measurement result in the measurement period of the NCSG.

In a possible design, the method further includes: performing data transmission with the terminal device by using a serving cell in the measurement period of the NCSG, where a frequency at which the serving cell is located is in a frequency range FR1.

In a possible design, the method further includes: performing, based on intra-frequency scheduling restriction information corresponding to a frequency range FR2, data transmission with the terminal device by using a serving cell in the measurement period of the NCSG, where a frequency at which the serving cell is located is in the FR2.

According to a third aspect, an embodiment of this application provides a communication apparatus. The communication apparatus may be a terminal device, or may be an apparatus, a module, a chip, or the like in the terminal device, or may be an apparatus that can be used in matching with the terminal device. In a design, the communication apparatus may include modules that are in one-to-one correspondence with the methods/operations/steps/actions described in the first aspect. The modules may be implemented by a hardware circuit, software, or a combination of a hardware circuit and software. In a design, the communication apparatus may include a processing module and a communication module.

The communication module is configured to: send first capability information, where the first capability information indicates that the terminal device supports performing intra-frequency measurement without measurement gap in a measurement period of a network controlled small gap NCSG; and obtain resource configuration information for a first synchronization signal block measurement timing configuration SMTC and resource configuration information for the NCSG.

The processing module is configured to: when a part or all of measurement opportunities of the first SMTC are covered by the measurement period of the NCSG, perform intra-frequency measurement without measurement gap based on a first intra-frequency measurement periodicity, where the first intra-frequency measurement periodicity is determined based on at least a periodicity of the first SMTC, a first scaling factor, and a second scaling factor, and the first scaling factor and the second scaling factor are 1.

In a possible design, the intra-frequency measurement without measurement gap that is indicated in the first capability information includes intra-frequency measurement corresponding to a primary component carrier, and the first SMTC is an SMTC for the primary component carrier. For example, the first capability information includes an IntraMeasInNCSG capability identifier, used to report a capability of the terminal device simultaneously performing NCSG-based measurement and SMTC-based intra-frequency measurement on a PCC.

In a possible design, the intra-frequency measurement without measurement gap that is indicated in the first capability information further includes intra-frequency measurement corresponding to a secondary component carrier. For example, the first capability information includes an SCCMeasInNCSG capability identifier, used to report a capability of the terminal device simultaneously performing NCSG-based measurement and SMTC-based intra-frequency measurement on an SCC.

In a possible design, the method further includes: sending second capability information, where the second capability information indicates a quantity M of radio frequency channels simultaneously measurable by the terminal device, and M is a positive integer greater than or equal to 2. For example, the second capability information includes a MeasChanNumInNCSG capability identifier, and a value of the MeasChanNumInNCSG capability identifier is M.

In a possible design, when M is greater than 2, the communication module is further configured to obtain resource configuration information for a second SMTC, where the second SMTC is an SMTC for one of N secondary component carriers, and N is a positive integer. The processing module is further configured to: when a part or all of measurement opportunities of the second SMTC are covered by the measurement period of the NCSG, perform intra-frequency measurement without measurement gap based on a second intra-frequency measurement periodicity, where the second intra-frequency measurement periodicity is determined based on at least a periodicity of the second SMTC, a third scaling factor, and a fourth scaling factor, the third scaling factor is 1, and the fourth scaling factor is determined based on N and M. For example, when M is 3, a value of the fourth scaling factor is N.

In a possible design, when M is equal to 2, the communication module is further configured to obtain resource configuration information for a second SMTC, where the second SMTC is an SMTC for one of N secondary component carriers, and N is a positive integer. The processing module is further configured to: when a part of measurement opportunities of the second SMTC are covered by the measurement period of the NCSG, perform intra-frequency measurement without measurement gap based on a third intra-frequency measurement periodicity, where the third intra-frequency measurement periodicity is determined based on at least a periodicity of the second SMTC, a fifth scaling factor, and a sixth scaling factor, the fifth scaling factor is determined based on the periodicity of the second SMTC and a periodicity of the NCSG, and the sixth scaling factor is N; or when all of measurement opportunities of the second SMTC are covered by the measurement period of the NCSG, perform intra-frequency measurement without measurement gap based on a fourth intra-frequency measurement periodicity, where the fourth intra-frequency measurement periodicity is determined based on at least a periodicity of the second SMTC, a seventh scaling factor, and an eighth scaling factor, the seventh scaling factor is 1, and the eighth scaling factor is determined based on N and a quantity of measurement frequencies for the NCSG.

In a possible design, the communication module is further configured to receive first indication information, where the first indication information indicates that the terminal device is allowed to perform the intra-frequency measurement without measurement gap in the measurement period of the NCSG.

In a possible design, the processing module is further configured to perform data transmission with a serving cell in the measurement period of the NCSG, where a frequency at which the serving cell is located is in a frequency range FR1.

In a possible design, the processing module is further configured to perform data transmission with a serving cell in the measurement period of the NCSG based on intra-frequency scheduling restriction information corresponding to a frequency range FR2, where a frequency at which the serving cell is located is in the FR2.

According to a fourth aspect, an embodiment of this application provides a communication apparatus. The communication apparatus may be a network device, or may be an apparatus, a module, a chip, or the like in the network device, or may be an apparatus that can be used in matching with the network device. In a design, the communication apparatus may include modules that are in one-to-one correspondence with the methods/operations/steps/actions described in the second aspect. The modules may be implemented by a hardware circuit, software, or a combination of a hardware circuit and software. In a design, the communication apparatus may include a processing module and a communication module.

The communication module is configured to: receive first capability information, where the first capability information indicates that a terminal device supports performing intra-frequency measurement without measurement gap in a measurement period of a network controlled small gap NCSG; and send resource configuration information for a first synchronization signal block measurement timing configuration SMTC and resource configuration information for the NCSG under the control of the processing module.

The communication module is further configured to: when a part or all of measurement opportunities of the first SMTC are covered by the measurement period of the NCSG, receive a first measurement result, where the first measurement result is a result of intra-frequency measurement without measurement gap that is performed based on a first intra-frequency measurement periodicity, the first intra-frequency measurement periodicity is determined based on at least a periodicity of the first SMTC, a first scaling factor, and a second scaling factor, and the first scaling factor and the second scaling factor are 1.

In a possible design, the intra-frequency measurement without measurement gap that is indicated in the first capability information includes intra-frequency measurement corresponding to a primary component carrier, and the first SMTC is an SMTC for the primary component carrier. For example, the first capability information includes an IntraMeasInNCSG capability identifier, used to report a capability of the terminal device simultaneously performing NCSG-based measurement and SMTC-based intra-frequency measurement on a PCC.

In a possible design, the intra-frequency measurement without measurement gap that is indicated in the first capability information further includes intra-frequency measurement corresponding to a secondary component carrier. For example, the first capability information includes an SCCMeasInNCSG capability identifier, used to report a capability of the terminal device simultaneously performing NCSG-based measurement and SMTC-based intra-frequency measurement on an SCC.

In a possible design, the method further includes: receiving second capability information, where the second capability information indicates a quantity M of radio frequency channels simultaneously measurable by the terminal device, and M is a positive integer greater than or equal to 2. For example, the second capability information includes a MeasChanNumInNCSG capability identifier, and a value of the MeasChanNumInNCSG capability identifier is M.

In a possible design, when M is greater than 2, under the control of the processing module, the communication module is further configured to: send resource configuration information for a second SMTC, where the second SMTC is an SMTC for one of N secondary component carriers, and N is a positive integer; and when a part or all of measurement opportunities of the second SMTC are covered by the measurement period of the NCSG, receive a second measurement result, where the second measurement result is a result of intra-frequency measurement without measurement gap that is performed based on a second intra-frequency measurement periodicity, the second intra-frequency measurement periodicity is determined based on at least a periodicity of the second SMTC, a third scaling factor, and a fourth scaling factor, the third scaling factor is 1, and the fourth scaling factor is determined based on N and M. For example, when M is 3, a value of the fourth scaling factor is N.

In a possible design, when M is equal to 2, the communication module is further configured to send resource configuration information for a second SMTC under the control of the processing module, where the second SMTC is an SMTC for one of N secondary component carriers, and N is a positive integer.

The communication module is further configured to: when a part of measurement opportunities of the second SMTC are covered by the measurement period of the NCSG, receive a third measurement result, where the third measurement result is a result of intra-frequency measurement without measurement gap that is performed based on a third intra-frequency measurement periodicity, the third intra-frequency measurement periodicity is determined based on at least a periodicity of the second SMTC, a fifth scaling factor, and a sixth scaling factor, the fifth scaling factor is determined based on the periodicity of the second SMTC and a periodicity of the NCSG, and the sixth scaling factor is N; or
when all of measurement opportunities of the second SMTC are covered by the measurement period of the NCSG, receive a fourth measurement result, where the fourth measurement result is a result of intra-frequency measurement without measurement gap that is performed based on a fourth intra-frequency measurement periodicity, the fourth intra-frequency measurement periodicity is determined based on at least a periodicity of the second SMTC, a seventh scaling factor, and an eighth scaling factor, the seventh scaling factor is 1, and the eighth scaling factor is determined based on N and a quantity of measurement frequencies for the NCSG.

In a possible design, the communication module is further configured to send first indication information under the control of the processing module, where the first indication information indicates that the terminal device is allowed to perform intra-frequency measurement without measurement result in the measurement period of the NCSG.

In a possible design, the processing module is further configured to perform data transmission with the terminal device by using a serving cell in the measurement period of the NCSG, where a frequency at which the serving cell is located is in a frequency range FR1.

In a possible design, the processing module is further configured to perform, based on intra-frequency scheduling restriction information corresponding to a frequency range FR2, data transmission with the terminal device by using a serving cell in the measurement period of the NCSG, where a frequency at which the serving cell is located is in the FR2.

According to a fifth aspect, an embodiment of this application provides a communication apparatus. The communication apparatus includes a processor, configured to implement the method described in the first aspect. The processor is coupled to a memory, and the memory is configured to store instructions and data. When executing the instructions stored in the memory, the processor may implement the method described in the first aspect. Optionally, the communication apparatus may further include the memory. The communication apparatus may further include a communication interface. The communication interface is used by the communication apparatus to communicate with another device. For example, the communication interface may be a transceiver, a circuit, a bus, a module, a pin, or a communication interface of another type.

According to a sixth aspect, an embodiment of this application provides a communication apparatus. The communication apparatus includes a processor, configured to implement the method described in the second aspect. The processor is coupled to a memory, and the memory is configured to store instructions and data. When executing the instructions stored in the memory, the processor may implement the method described in the second aspect. Optionally, the communication apparatus may further include the memory. The communication apparatus may further include a communication interface. The communication interface is used by the communication apparatus to communicate with another device. For example, the communication interface may be a transceiver, a circuit, a bus, a module, a pin, or a communication interface of another type.

According to a seventh aspect, this disclosure provides a communication system, including the communication apparatus described in the third aspect or the fifth aspect, and the communication apparatus described in the fourth aspect or the sixth aspect.

According to an eighth aspect, this disclosure further provides a computer program. When the computer program is run on a computer, the computer is enabled to perform the method provided in the first aspect or the second aspect.

According to a ninth aspect, this disclosure further provides a computer program product, including instructions. When the instructions are run on a computer, the computer is enabled to perform the method provided in the first aspect or the second aspect.

According to a tenth aspect, this disclosure further provides a computer-readable storage medium. The computer-readable storage medium stores a computer program or instructions, and when the computer program or the instructions are run on a computer, the computer is enabled to perform the method provided in the first aspect or the second aspect.

According to an eleventh aspect, this disclosure further provides a chip. The chip is configured to read a computer program stored in a memory to perform the method provided in the first aspect or the second aspect, or the chip includes a circuit configured to perform the method provided in the first aspect or the second aspect.

According to a twelfth aspect, this disclosure further provides a chip system. The chip system includes a processor, configured to support an apparatus in implementing the method provided in the first aspect or the second aspect. In a possible design, the chip system further includes a memory, and the memory is configured to store a program and data that are necessary for the apparatus. The chip system may include a chip, or may include a chip and another discrete component.

For effect of the solutions provided in any one of the second aspect to the twelfth aspect, refer to the corresponding descriptions in the first aspect.

### BRIEF DESCRIPTION OF DRAWINGS

FIG. 1 is a diagram of an architecture of a communication system;
FIG. 2 is a diagram of a resource configuration of an NCSG;
FIG. 3A is a diagram of a resource conflict between an SMTC and an NCSG;
FIG. 3B is a diagram of a resource conflict between an SMTC and an NCSG;
FIG. 3C is a diagram of a resource conflict between an SMTC and an NCSG;
FIG. 3D is a diagram of a resource conflict between an SMTC and an NCSG;
FIG. 4 is a schematic flowchart of a measurement method according to an embodiment of this application;
FIG. 5A is a diagram of simultaneously performing SMTC-based measurement, NCSG-based measurement, and data transmission;
FIG. 5B is a diagram of simultaneously performing SMTC-based measurement, NCSG-based measurement, and data transmission;
FIG. 6 is a schematic flowchart of a measurement method according to an embodiment of this application;
FIG. 7A is a diagram of simultaneously performing SMTC-based measurement, NCSG-based measurement, and data transmission;
FIG. 7B is a diagram of simultaneously performing SMTC-based measurement, NCSG-based measurement, and data transmission;
FIG. 8 is a diagram of a structure of a communication apparatus according to an embodiment of this application; and
FIG. 9 is a diagram of a structure of a communication apparatus according to an embodiment of this application.

### DESCRIPTION OF EMBODIMENTS

To make the objectives, technical solutions, and advantages of embodiments of this application clearer, the following further describes embodiments of this application in detail with reference to accompanying drawings.

At least one (item) in embodiments of this application indicates one or more (items). A plurality of (items) means two (items) or more than two (items). The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects. However, in a calculation formula, "/" represents a division sign. In addition, it should be understood that although terms such as first and second may be used in embodiments of this application to describe objects, these objects should not be limited by these terms. These terms are merely used to distinguish the objects from each other.

The terms "including", "having", and any variants thereof in the following descriptions of embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device. It should be noted that in embodiments of this application, the word like "example", "for example", or the like is used to represent giving an example, an illustration, or a description. Any method or design scheme described as an "example" or "for example" in embodiments of this application should not be explained as being more preferred or having more advantages than another method or design scheme. To be precise, use of the word such as "example" or "for example" is intended to present a relative concept in a specific manner.

Technologies provided in embodiments of this application may be applied to various communication systems. For example, the communication system may be a 3rd generation (3rd generation, 3G) communication system (for example, evolved universal terrestrial radio access (evolved universal terrestrial radio access, E-UTRA)-NR dual connectivity or a universal mobile telecommunications system (universal mobile telecommunications system, UMTS)), a 4th generation (4th generation, 4G) communication system (for example, a long term evolution (long term evolution, LTE) system), a 5th generation (5th generation, 5G) communication system, a worldwide interoperability for microwave access (worldwide interoperability for microwave access, WiMAX) or a wireless local area network (wireless local area network, WLAN) system, a system integrating a plurality of kinds of systems, or a future communication system like a 6th generation (6th generation, 6G) communication system. The 5G communication system may also be referred to as a new radio (new radio, NR) system.

A network element in a communication system may send a signal to another network element or receive a signal from another network element. The signal may include information, data, or the like. The network element may also be referred to as an entity, a network entity, a device, a communication device, a communication module, a node, a communication node, or the like. In embodiments of this application, the network element is used as an example for description. For example, the communication system may include at least one terminal device and at least one network device. A signal sending network element may be a network device, and a signal receiving network element may be a terminal device; or a signal sending network element may be a terminal device, and a signal receiving network element may be a network device. In addition, it may be understood that if the communication system includes a plurality of terminal devices, the plurality of terminal devices may also send signals to each other. That is, both a signal sending network element and a signal receiving network element may be terminal devices.

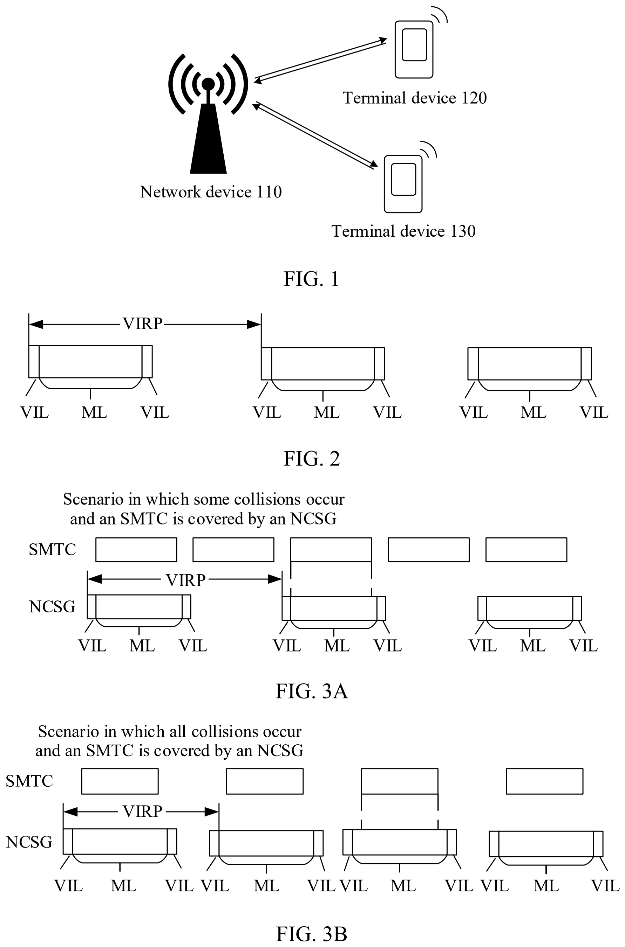

FIG. 1 shows a communication system 100. For example, the communication system 100 includes a network device 110 and two terminal devices: a terminal device 120 and a terminal device 130. At least one of the terminal device 120 and the terminal device 130 may send uplink data to the network device 110, and the network device 110 may receive the uplink data. The network device may send downlink data to at least one of the terminal device 120 and the terminal device 130.

The following describes in detail the terminal device and the network device in FIG. 1.

The terminal device is also referred to as a terminal, user equipment (user equipment, UE), a mobile station (mobile station, MS), a mobile terminal (mobile terminal, MT), or the like, and is a device that provides a user with voice and/or data connectivity. The terminal device may communicate with one or more core network devices by using the network device. The terminal device includes a handheld device having a wireless connection function, another processing device connected to a wireless modem, a vehicle-mounted device, or the like. The terminal device may be a portable, pocket-sized, handheld, computer built-in, or vehicle-mounted mobile apparatus. Examples of some terminal devices are: a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), a wireless network camera, a mobile phone (mobile phone), a tablet computer, a notebook computer, a palmtop computer, a mobile internet device (mobile internet device, MID), a wearable device like a smartwatch, a virtual reality (virtual reality, VR) device, an augmented reality (augmented reality, AR) device, a wireless terminal in industrial control (industrial control), a terminal in an internet of vehicles system, a wireless terminal in self-driving (self-driving), a wireless terminal in a smart grid (smart grid), a wireless terminal in transportation safety (transportation safety), a wireless terminal like a smart fueler in a smart city (smart city), a terminal device on a high-speed railway, and wireless terminals in a smart home (smart home), such as a smart speaker, a smart coffee machine, and a smart printer.

In embodiments of this application, a communication apparatus configured to implement a function of the terminal device may be a terminal device, or may be a terminal device having some functions of the terminal, or may be an apparatus that can support the terminal device in implementing the function, for example, a chip system. The apparatus may be installed in the terminal device. In embodiments of this application, the chip system may include a chip, or may include a chip and another discrete component. In the technical solutions provided in embodiments of this application, an example in which the communication apparatus configured to implement the function of the terminal device is the terminal device or UE is used for description.

In embodiments of this application, "sending information to... (a terminal device)" may be understood as that a destination end of the information is the terminal device, and may include directly or indirectly sending the information to the terminal device. "Receiving information from... (a terminal device)" may be understood as that a source end of the information is the terminal device, and may include directly or indirectly receiving the information from the terminal device. Necessary processing, for example, a format change, may be performed on the information between the source end and the destination end for information sending. However, the destination end can understand valid information from the source end. A similar expression in this application may be understood similarly. Details are not described herein again.

The network device may be a base station (base station, BS), or the network device may be referred to as an access network device, an access node (access node, AN), or a radio access node (radio access node, RAN). The network device may be connected to a core network (for example, an LTE core network or a 5G core network), and the network device may provide a wireless access service for the terminal device. Some examples of the network device include but are not limited to at least one of the following: a next generation NodeB (generation NodeB, gNB) in 5G, a network device in an open radio access network (open radio access network, O-RAN), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a transmitting and receiving point (transmitting and receiving point, TRP), a transmitting point (transmitting point, TP), and/or a mobile switching center. Alternatively, the network device may be a relay station, an access point, a vehicle-mounted device, a wearable device, a network device in a future evolved public land mobile network (public land mobile network, PLMN), or the like.

One network device may include one or more cells. When one network device includes one cell, the network device may also be considered as the cell. The network device may provide a network service for the terminal device by using at least one cell. To be specific, the terminal device may access the network device by using the at least one cell, and the network device may communicate with the terminal device by using the at least one cell. When the network device may provide the network service for the terminal device by using one cell, the cell may be understood as a serving cell (serving cell) of the terminal device. When the network device may provide the network service for the terminal device by using a plurality of cells, it may be understood that the serving cell of the terminal device includes a plurality of cells, and a cell that is first accessed by the terminal device in the plurality of cells is a primary serving cell of the terminal device, which is referred to as a primary cell (primary cell, PCell) for short. A cell other than the PCell in the plurality of cells is a secondary serving cell of the terminal device, which is referred to as a secondary cell (secondary cell, SCell) for short. In addition, in some scenarios, the secondary serving cell may alternatively be described as a slave serving cell, and the secondary cell may alternatively be described as a slave cell.

In embodiments of this application, a communication apparatus configured to implement a function of the network device may be a network device, or may be an apparatus having some functions of the network device, or may be an apparatus that can support the network device in implementing the function, for example, a chip system. The apparatus may be installed in the network device. In embodiments of this application, the chip system may include a chip, or may include a chip and another discrete component. In the technical solutions provided in embodiments of this application, an example in which the communication apparatus configured to implement the function of the network device is a network device is used for description.

In embodiments of this application, "sending information to... (a network device) "may be understood as that a destination end of the information is the network device, and may include directly or indirectly sending the information to the network device. "Receiving information from... (a network device) "may be understood as that a source end of the information is the network device, and may include directly or indirectly receiving the information from the network device. Necessary processing, for example, a format change, may be performed on the information between the source end and the destination end for information sending. However, the destination end can understand valid information from the source end. A similar expression in this application may be understood similarly. Details are not described herein again.

It should be understood that a quantity and types of the devices in the communication system shown in FIG. 1 are merely used as an example, and embodiments of this application are not limited thereto. In actual application, the communication system may further include more terminal devices and more network devices, and may further include another network element, for example, may include a core network device, and/or a network management device like an operations, administration, and management (operations, administration, and maintenance, OAM) device.

The communication system and a service scenario described in embodiments of this application are intended to describe the technical solutions in embodiments of this application more clearly, and do not constitute a limitation on the technical solutions provided in embodiments of this application. A person of ordinary skill in the art may know that, with evolution of a network architecture and emergence of a new service scenario, the technical solutions provided in embodiments of this application are also applicable to a similar technical problem.

The following first describes related terms in embodiments of this application. It should be noted that the descriptions are intended to make embodiments of this application easier to understand, but should not be construed as a limitation on the protection scope claimed in this application.

### (1) Radio resource management (radio resource management, RRM) measurement

In a communication system, due to mobility of a terminal device, to ensure service continuity and communication quality of the terminal device, the terminal device usually needs to perform RRM measurement, to implement beam switching, cell reselection (reselection), or cell handover (handover), so as to change a cell on which the terminal device camps, to obtain a continuous service. In a scenario in which RRM measurement is performed, a network device may send a reference signal to the terminal device by using a cell managed by the network device, and the terminal device performs RRM measurement based on the reference signal, to implement a procedure like beam switching, cell reselection, or cell handover. For example, the reference signal may be a synchronization signal block (synchronization signal block, SSB) or a channel state information-reference signal (channel state information-reference signal, CSI-RS).

The RRM measurement may also be understood as cell measurement or neighboring cell measurement, and the RRM measurement specifically includes intra-frequency measurement, inter-frequency measurement, and inter-RAT measurement. SSB-based RRM measurement is used as an example. For SSB-based measurement configured by the network device at a to-be-measured frequency, if an SSB at the to-be-measured frequency and an SSB of a serving cell have a same center frequency and a same subcarrier spacing (subcarrier spacing, SCS), the measurement is intra-frequency measurement. For SSB-based measurement configured by the network device at a to-be-measured frequency, if an SSB at the to-be-measured frequency and an SSB of a serving cell have different center frequencies or different SCSs, the measurement is inter-frequency measurement. In an evolved universal terrestrial radio access-NR dual connectivity (E-UTRA-NR dual connectivity, EN-DC) scenario, measurement configured at a to-be-measured NR frequency by a serving cell under a 4G network device is referred to as inter-RAT measurement.

### (2) Carrier aggregation (carrier aggregation, CA)

A plurality of carriers scattered in a plurality of frequency bands are aggregated to form larger bandwidth, so as to increase peak throughput of UE. An aggregated carrier configured by a network device for a terminal device includes one primary component carrier (primary component carrier, PCC) and at least one secondary component carrier (secondary component carrier, SCC). A serving cell that is of the terminal device and that corresponds to the PCC is a primary cell PCell, and a serving cell that is of the terminal device and that corresponds to the SCC is a secondary cell SCell.

### (3) Network controlled small gap (network controlled small gap, NCSG)

For a terminal device supporting an NCSG capability, a network device may configure a periodic NCSG, and the terminal device may periodically measure one or more frequencies based on the NCSG (with NCSG), for example, inter-frequency RRM measurement, SSB-based inter-frequency measurement, inter-RAT measurement, measurement on a deactivated SCC, and RRM measurement (excluding L1 measurement) on a dormant (Dormant) SCC. It may be understood that NCSG-based measurement is measurement with measurement gap.

The NCSG includes a measurement period and short interruptions that may be caused by radio frequency/baseband adjustment before and after measurement. As shown in FIG. 2, the measurement period of the NCSG is denoted as a measurement length (measurement length, ML), and short interruptions configured before and after the ML are denoted as visible interruption lengths (visible interruption length, VIL). A periodicity of the NCSG may be a visible interruption repetition period (visible interruption repetition period, VIRP). When the terminal device is in a radio resource control (Radio Resource Control, RRC) connected (CONNECTED) state, the network device may configure a resource of the NCSG for the terminal device by using a serving cell. The terminal device may perform measurement and data transmission with the serving cell in the ML, but does not perform measurement and data transmission in the VIRP.

### (4) Intra-frequency measurement without measurement gap (without measurement GAP)

Compared with the foregoing measurement configuration with measurement gap like the NCSG, in an intra-frequency measurement scenario, a network device may configure, for a terminal device, a measurement resource without measurement gap that is used by the terminal device to perform intra-frequency measurement without measurement gap. For example, the network device may configure an SSB measurement timing configuration (SSB measurement timing configuration, SMTC) resource, for example, a periodic SMTC measurement opportunity, for the terminal device. The terminal device may perform SSB-based intra-frequency measurement in the SMTC measurement opportunity.

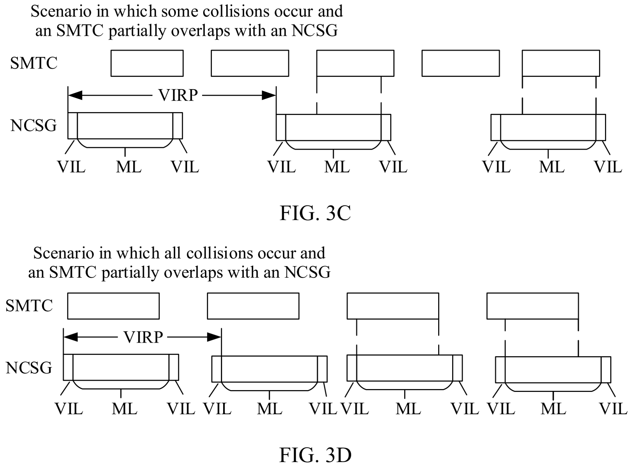

In some scenarios, a resource configuration of the SMTC may conflict with a resource configuration of the NCSG. For example, FIG. 3A shows a scenario in which a part of measurement opportunities of the SMTC collide with the measurement period (the ML) of the NCSG, and one measurement opportunity of the SMTC is covered (cover) by one ML of the NCSG. FIG. 3B shows a scenario in which all of measurement opportunities of the SMTC collide with the measurement period (the ML) of the NCSG, and one measurement opportunity of the SMTC is covered by one ML of the NCSG. It may be understood that, in the scenario shown in FIG. 3A or FIG. 3B, a time range of the measurement opportunity of the SMTC is less than or equal to a time range of the ML, and the measurement opportunity of the SMTC is included in the ML. In addition, FIG. 3C shows a scenario in which a part of measurement opportunities of the SMTC collide with the measurement period (the ML) of the NCSG, and one measurement opportunity of the SMTC partially overlaps with one ML of the NCSG. FIG. 3D shows a scenario in which all of measurement opportunities of the SMTC collide with the measurement period (the ML) of the NCSG, and one measurement opportunity of the SMTC partially overlaps with one ML of the NCSG.

Currently, for the foregoing case in which the resource configuration of the SMTC conflicts with the resource configuration of the NCSG, an intra-frequency measurement periodicity without measurement gap needs to be increased. For example, in the scenario shown in FIG. 3A, intra-frequency measurement cannot be performed in the SMTC covered by the ML of the NCSG. Such a design causes an increase in a result reporting delay for intra-frequency measurement, and further reduces mobility handover performance of the terminal device. Based on this, an embodiment of this application provides a corresponding measurement method, to shorten the intra-frequency measurement periodicity without measurement gap, thereby reducing the result reporting delay for intra-frequency measurement, and improving mobility handover performance of the terminal device.

The following describes in detail the measurement method provided in embodiments of this application by using Solution 1 and Solution 2.

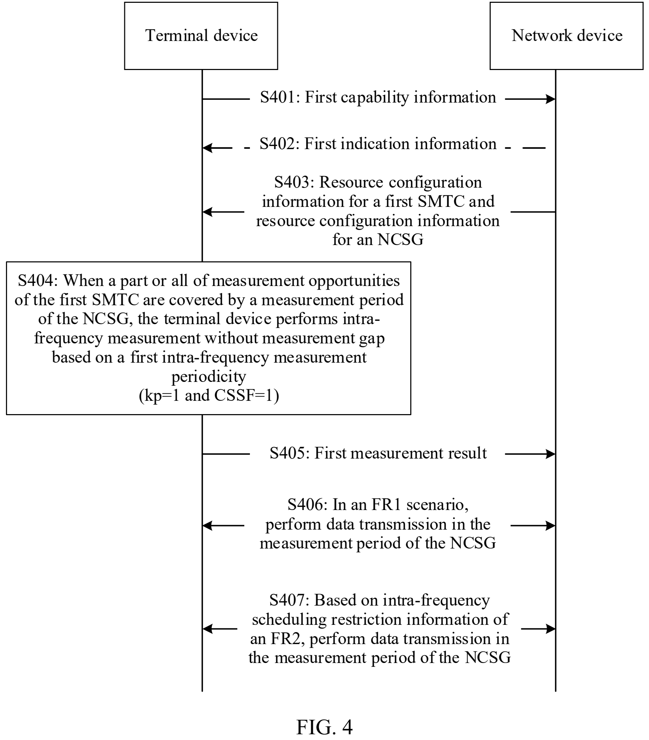

Solution 1: For a case in which a resource of an intra-frequency SMTC for a single serving cell or a primary component carrier PCC conflicts with a resource of an NCSG, FIG. 4 shows a measurement method, relates to interaction between a network device and a terminal device, and mainly includes the following steps.

S401: The terminal device sends first capability information to the network device.

That the first capability information indicates that the terminal device supports performing intra-frequency measurement without measurement gap in a measurement period of the NCSG may also be described as follows: The first capability information indicates that the terminal device supports simultaneously performing NCSG-based measurement (for example, inter-frequency RRM measurement) and intra-frequency measurement without measurement gap (for example, SMTC-based intra-frequency measurement) in the measurement period of the NCSG. For the single serving cell or the primary component carrier PCC, the intra-frequency measurement without measurement gap that is indicated in the first capability information includes intra-frequency measurement corresponding to the single serving cell or the primary component carrier PCC.

In an optional implementation, the first capability information may include an IntraMeasInNCSG capability identifier of the terminal device, and the IntraMeasInNCSG capability identifier indicates that the terminal device supports performing intra-frequency measurement without measurement gap on the single serving cell or the primary component carrier PCC in the measurement period of the NCSG.

S402: The network device sends first indication information to the terminal device.

It may be understood that the first indication information is sent by the network device in response to the first capability information, and the first indication information indicates that the terminal device is allowed or disallowed to perform the intra-frequency measurement without measurement gap in the measurement period of the NCSG. When the first indication information indicates that the terminal device is allowed to perform the intra-frequency measurement without measurement gap in the measurement period of the NCSG, the following S403 may continue to be performed. When the first indication information indicates that the terminal device is not allowed to perform the intra-frequency measurement without measurement gap in the measurement period of the NCSG, the terminal device does not perform the intra-frequency measurement without measurement gap in the measurement period of the NCSG.

In some implementations, the terminal device reporting the first capability information may alternatively perform, by default, the intra-frequency measurement without measurement gap in the measurement period of the NCSG. In other words, the terminal device supporting an IntraMeasInNCSG capability performs, by default, the intra-frequency measurement without measurement gap in the measurement period of the NCSG. In these implementations, S402 does not need to be performed, in other words, S403 is directly performed after S401 is performed. Therefore, S402 may be considered as an optional step, and is shown by using a dashed line in FIG. 4.

S403: The network device sends resource configuration information for a first SMTC and resource configuration information for the NCSG to the terminal device.

The resource configuration information for the first SMTC includes time information of a measurement opportunity, a periodicity (SMTC periodicity), and the like of the first SMTC. The resource configuration information for the NCSG includes time information of the measurement period (for example, the ML), time information of the short interruption (for example, the VIL), the periodicity (the VIRP), and the like.

It may be understood that, for the single serving cell or the primary component carrier PCC configured by a network, the first SMTC may be an SMTC for the single serving cell or the primary component carrier PCC. Optionally, if there are a plurality of SMTCs for the single serving cell or the PCC, the first SMTC is one of the plurality of SMTCs.

Further, the terminal device may separately determine corresponding intra-frequency measurement periodicities for the different resource conflict scenarios shown in FIG. 3A to FIG. 3D based on the resource configuration information for the first SMTC and the resource configuration information for the NCSG. Further, the terminal device may perform, based on the determined intra-frequency measurement periodicity, intra-frequency measurement without measurement gap.

For example, for the scenarios shown in FIG. 3A and FIG. 3B, an intra-frequency measurement process without measurement gap may be implemented with reference to the following S404.

S404: When a part or all of measurement opportunities of the first SMTC are covered by the measurement period of the NCSG, the terminal device performs intra-frequency measurement without measurement gap based on a first intra-frequency measurement periodicity.

It may be understood that the terminal device may determine, based on the resource configuration information for the first SMTC and the resource configuration information for the NCSG, whether the part of measurement opportunities or all of the measurement opportunities of the first SMTC are covered by the measurement period of the NCSG. The first intra-frequency measurement periodicity may be determined based on at least the periodicity of the first SMTC, a first scaling factor, and a second scaling factor, the first scaling factor is 1, and the second scaling factor is 1. For example, the first intra-frequency measurement periodicity is determined based on the SMTC periodicity, Kp, and a CSSF. The SMTC periodicity is the periodicity of the first SMTC. Kp is the first scaling factor, in other words, Kp=1. The CSSF is a carrier-specific scaling factor (carrier-specific scaling factor). The CSSF is the second scaling factor, in other words, the CSSF is equal to 1. Optionally, because both the first scaling factor and the second scaling factor are 1, the first scaling factor and the second scaling factor may not be reflected in calculation of the first intra-frequency measurement periodicity. For example, this is replaced with the following description: The first intra-frequency measurement periodicity may be determined based on at least the periodicity of the first SMTC.

In addition, it may be understood that, corresponding to the solution described in S404, when an NCSG-based measurement periodicity is calculated, only a quantity of measurement frequencies for the NCSG may be considered, and a quantity of measurement frequencies for the intra-frequency SMTC for the single serving cell or the PCC is not considered. In this embodiment of this application, the NCSG-based measurement periodicity is a measurement periodicity of an NCSG-based measurement frequency, and the quantity of measurement frequencies for the NCSG is a quantity of NCSG-based measurement frequencies. For example, when an NCSG measurement-based frequency is an inter frequency, the NCSG-based measurement may be inter-frequency RRM measurement. Optionally, the NCSG-based measurement periodicity may be determined based on the SMTC periodicity, the periodicity of the NCSG (for example, the VIRP), and the quantity of measurement frequencies for the NCSG that are configured by the network device.

Similarly, for the scenario shown in FIG. 3C, when the part of measurement opportunities of the first SMTC partially overlap with the measurement period of the NCSG, Kp used to calculate an intra-frequency measurement periodicity for the single serving cell or the PCC is equal to 1/(1-SMTC periodicity/VIRP), and the CSSF is equal to 1. The NCSG-based measurement periodicity is determined based on the SMTC periodicity, the periodicity of the NCSG, and the quantity of measurement frequencies for the NCSG that are configured by the network device.

For the scenario shown in FIG. 3D, when all of the measurement opportunities of the first SMTC partially overlap with the measurement period of the NCSG, Kp used to calculate an intra-frequency measurement periodicity for the single serving cell or the PCC is equal to 1. The CSSF is obtained through calculation based on the quantity of measurement frequencies for the intra-frequency SMTC for the single serving cell or the PCC and the quantity of measurement frequencies for the NCSG. For example, P is used to represent the quantity of measurement frequencies for the NCSG, and it may be understood that the CSSF is equal to 1+P, where P is a positive integer. Correspondingly, when the NCSG-based measurement periodicity is calculated, the quantity of measurement frequencies for the intra-frequency SMTC for the single serving cell or the PCC and the quantity of measurement frequencies for the NCSG also need to be considered. For example, the NCSG-based measurement periodicity may be determined based on the SMTC periodicity, the periodicity of the NCSG (for example, the VIRP), and the CSSF that are configured by the network device.

S405: The terminal device reports a first measurement result to the network device.

It may be understood that the first measurement result includes a result of the intra-frequency measurement without measurement gap that is performed by the terminal device based on the first intra-frequency measurement periodicity in S404.

In addition, optionally, in the measurement period of the NCSG, the network device may further perform data transmission with the terminal device by using a serving cell, for example, send downlink data and/or receive uplink data. Correspondingly, in the measurement period of the NCSG, the terminal device may also perform data transmission with the serving cell, for example, receive downlink data and/or send uplink data.

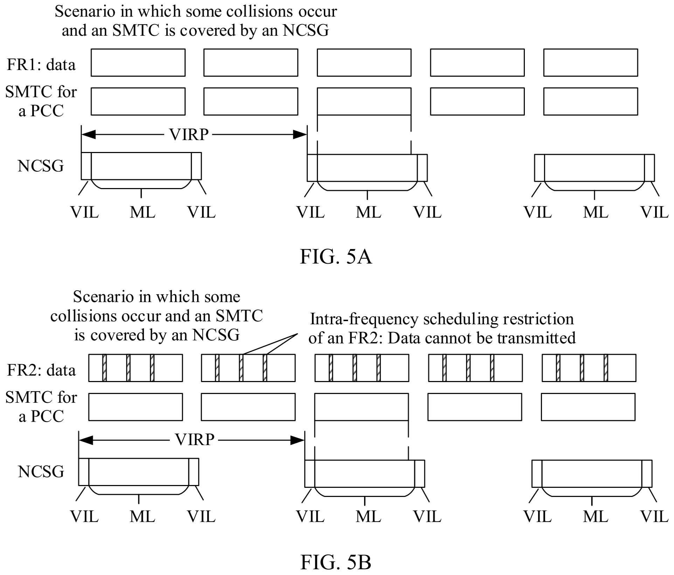

In a possible design, when a frequency at which the serving cell is located is in a frequency range 1 (frequency range 1, FR1), and there is no intra-frequency scheduling restriction and no inter-frequency scheduling restriction, S406 may be further performed in the measurement method shown in FIG. 4: The network device performs data transmission with the terminal device by using the serving cell in the measurement period of the NCSG. It may be understood that S406 and S404 may be performed in parallel. For example, based on FIG. 3A, FIG. 5A shows that in an FR1 scenario, performing normal data transmission performed in all time of the measurement period of the NCSG is supported.

In another possible design, a frequency at which the serving cell is located is in a frequency range 2 (frequency range 2, FR2), the intra-frequency measurement without measurement gap includes intra-frequency measurement in the FR2, and inter-frequency measurement performed within the NCSG may be RRM measurement at an inter frequency in the FR1. S407 may be further performed in the measurement method shown in FIG. 4: The network device performs data transmission with the terminal device by using the serving cell in the measurement period of the NCSG based on intra-frequency scheduling restriction information corresponding to the FR2. Correspondingly, the terminal device may also perform data transmission with the serving cell in the measurement period of the NCSG based on the intra-frequency scheduling restriction information corresponding to the FR2. It may be understood that S407 and S404 may be performed in parallel. Optionally, the intra-frequency scheduling restriction information corresponding to the FR2 includes: skipping performing data transmission in measurement time of an SSB in a measurement opportunity of the SMTC. In an example, based on FIG. 3A, FIG. 5B shows that in an FR2 scenario, performing data transmission is supported in a part of time of the measurement period of the NCSG based on the intra-frequency scheduling restriction information corresponding to the FR2.

In addition, optionally, if the terminal device does not support the IntraMeasInNCSG capability, in other words, the terminal device does not support performing intra-frequency measurement without measurement gap on the PCC within the NCSG, within the NCSG, the terminal device may perform NCSG-based measurement, and perform normal data transmission with the serving cell in the FR1, or perform data transmission with the serving cell in the FR2 based on the intra-frequency scheduling restriction information corresponding to the FR2.

Solution 2: Based on SMTC-based intra-frequency measurement on a primary component carrier PCC in a period of an NCSG, for a case in which a resource of an intra-frequency SMTC for at least one secondary component carrier SCC conflicts with a resource of the NCSG, a multi-radio frequency channel capability of a terminal device may be used, to implement SMTC-based intra-frequency measurement on the one or more SCCs in the measurement period of the NCSG.

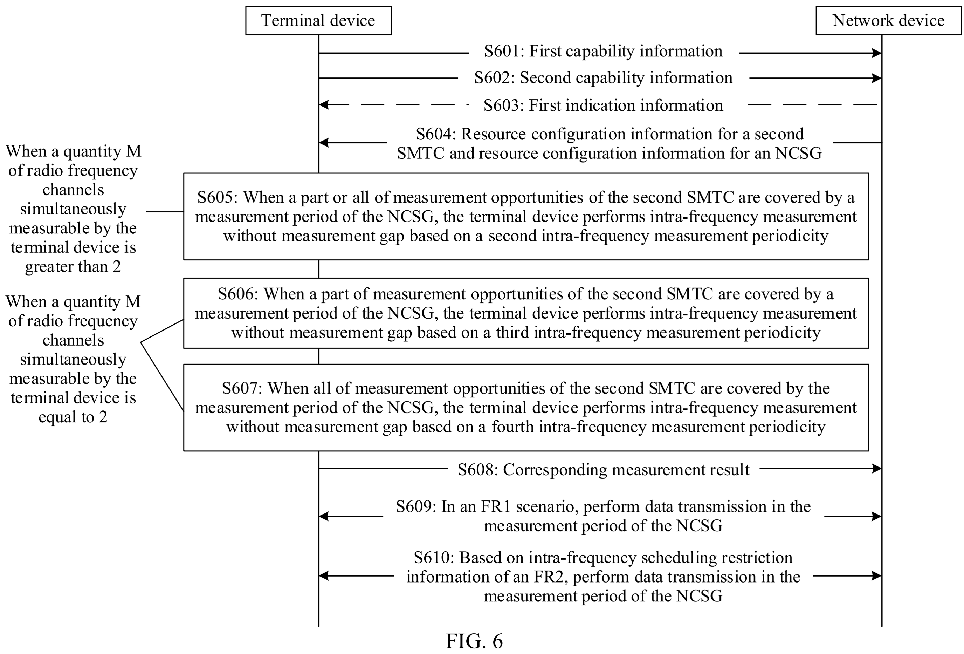

When a resource of an intra-frequency SMTC for any one of the at least one SCC conflicts with the resource of the NCSG, the terminal device may perform RRM measurement with reference to a measurement method shown in FIG. 6. The measurement method shown in FIG. 6 mainly includes the following steps.

S601: The terminal device sends first capability information to a network device.

That the first capability information indicates that the terminal device supports performing intra-frequency measurement without measurement gap in the measurement period of the NCSG may also be described as follows: The first capability information indicates that the terminal device supports simultaneously performing NCSG-based measurement (for example, inter-frequency RRM measurement) and intra-frequency measurement without measurement gap in the measurement period of the NCSG. In a CA scenario, the intra-frequency measurement without measurement gap that is indicated in the first capability information may include intra-frequency measurement corresponding to the PCC and intra-frequency measurement corresponding to the at least one SCC.

In an optional implementation, the first capability information may include an IntraMeasInNCSG capability identifier and an SCCMeasInNCSG capability identifier of the terminal device. The IntraMeasInNCSG capability identifier indicates that the terminal device supports performing intra-frequency measurement without measurement gap on a PCC in the measurement period of the NCSG, and the SCCMeasInNCSG capability identifier indicates that the terminal device supports performing intra-frequency measurement without measurement gap on an SCC in the measurement period of the NCSG.

S602: The terminal device sends second capability information to the network device. The second capability information indicates a quantity M of radio frequency channels simultaneously measurable by the terminal device, and M is a positive integer greater than or equal to 2.

In an optional implementation, the second capability information may include a MeasChanNumInNCSG capability identifier of the terminal device, and the MeasChanNumInNCSG capability identifier indicates simultaneous channel measurement capability of the terminal device in the measurement period of the NCSG. A value is the quantity of radio frequency channels simultaneously measurable by the terminal device, for example, one of 2, 3, ..., or MaxCCNum. MaxCCNum is a maximum quantity of radio frequency channels of the terminal device.

It may be understood that an execution sequence of S601 and S602 is not limited in embodiments of this application. For example, S601 may be performed before S602, or S602 may be performed before S601, or S601 and S602 may be simultaneously performed. Optionally, an implementation of simultaneously performing S601 and S602 may be as follows: The terminal device may include the first capability information and the second capability information in one piece of signaling or one message, and send the signaling or message to the network device.

S603: The network device sends first indication information to the terminal device.

For understanding of this step, refer to S402. Details are not described again in embodiments of this application. Correspondingly, as an optional step, S603 is shown by using a dashed line in FIG. 6.

S604: The network device sends resource configuration information for a second SMTC and resource configuration information for the NCSG to the terminal device.

The second SMTC may be an SMTC for one of N SCCs to be measured by the terminal device. Optionally, if there are a plurality of SMTCs for one SCC, the second SMTC is one of the plurality of SMTCs.

Optionally, the resource configuration information for the second SMTC includes time information of a measurement opportunity, a periodicity (SMTC periodicity), and the like of the second SMTC. The resource configuration information for the NCSG includes time information of the measurement period (for example, the ML), time information of the short interruption (for example, the VIL), the periodicity (the VIRP), and the like.

Further, after completing performing S604, the terminal device may separately determine corresponding intra-frequency measurement periodicities for the different resource conflict scenarios shown in FIG. 3A to FIG. 3D based on the resource configuration information for the second SMTC, the resource configuration information for the NCSG, and the quantity of radio frequency channels simultaneously measurable by the terminal device. Further, the terminal device may perform, based on the determined intra-frequency measurement periodicity, intra-frequency measurement without measurement gap. The following provides detailed descriptions by using Example 1 and Example 2.

Example 1: The quantity M of radio frequency channels simultaneously measurable by the terminal device is greater than 2.

For the scenarios shown in FIG. 3A and FIG. 3B, an intra-frequency measurement process without measurement gap may be implemented with reference to the following S605.

S605: When a part or all of measurement opportunities of the second SMTC are covered by the measurement period of the NCSG, the terminal device performs intra-frequency measurement without measurement gap based on a second intra-frequency measurement periodicity.

It may be understood that the terminal device may determine, based on the resource configuration information for the second SMTC and the resource configuration information for the NCSG, whether the part of measurement opportunities or all of the measurement opportunities of the second SMTC are covered by the measurement period of the NCSG. The second intra-frequency measurement periodicity may be determined based on at least the periodicity of the second SMTC, a third scaling factor, and a fourth scaling factor, the third scaling factor is 1, and the fourth scaling factor is determined based on N and M. For example, the second intra-frequency measurement periodicity is determined based on the SMTC periodicity, Kp, and a CSSF. The SMTC periodicity is the periodicity of the second SMTC. Kp is the third scaling factor, in other words, Kp=1. The CSSF is the fourth scaling factor, in other words, the CSSF is determined based on N and M. For example, when M is 3, the CSSF is equal to N. Optionally, if the terminal device simultaneously measures a large quantity of radio frequency channels, SMTC-based intra-frequency measurement on one SCC may alternatively be independently performed on one radio frequency channel. For example, when M is 4 and N is 2, a CSSF used to calculate the second intra-frequency measurement periodicity is equal to 1.

Similarly, for the scenario shown in FIG. 3C, when a part of measurement opportunities of the second SMTC partially overlap with the measurement period of the NCSG, Kp used to calculate an intra-frequency measurement periodicity for the SCC is equal to 1/(1-SMTC periodicity/VIRP). The CSSF is determined based on N and M. For the scenario shown in FIG. 3D, Kp used to calculate an intra-frequency measurement periodicity is equal to 1. The CSSF is determined based on N and M.

In addition, it may be understood that, for the scenarios shown in FIG. 3A to FIG. 3D, in Example 1, when an NCSG-based measurement periodicity is calculated, only a quantity of measurement frequencies for the NCSG is considered, and quantities of measurement frequencies for intra-frequency SMTCs for the PCC and the SCC are not considered. Optionally, the NCSG-based measurement periodicity is determined based on the SMTC periodicity, the periodicity of the NCSG (for example, the VIRP), and the quantity of measurement frequencies for the NCSG that are configured by the network device.

Example 2: The quantity M of radio frequency channels simultaneously measurable by the terminal device is equal to 2.

For the scenario shown in FIG. 3A, an intra-frequency measurement process without measurement gap may be implemented with reference to the following S606.

S606: When a part of measurement opportunities of the second SMTC are covered by the measurement period of the NCSG, the terminal device performs intra-frequency measurement without measurement gap based on a third intra-frequency measurement periodicity.

It may be understood that the terminal device may determine, based on the resource configuration information for the second SMTC and the resource configuration information for the NCSG, whether the part of measurement opportunities of the second SMTC are covered by the measurement period of the NCSG.

The third intra-frequency measurement periodicity may be determined based on at least the periodicity of the second SMTC, a fifth scaling factor, and a sixth scaling factor, the fifth scaling factor is determined based on the periodicity of the second SMTC and the periodicity of the NCSG (for example, the VIRP), and the sixth scaling factor is determined based on N. For example, the third intra-frequency measurement periodicity is determined based on the SMTC periodicity, Kp, and a CSSF. The SMTC periodicity is the periodicity of the second SMTC. Kp is the fifth scaling factor, for example, Kp=1/(1-SMTC periodicity/VIRP). The CSSF is the sixth scaling factor, and the CSSF is determined based on N, for example, the CSSF is equal to N.

In addition, it may be understood that, corresponding to the solution described in S606, when an NCSG-based measurement periodicity is calculated, only a quantity of measurement frequencies for the NCSG is considered, and quantities of measurement frequencies for intra-frequency SMTCs for the PCC and the SCC are not considered. Optionally, the NCSG-based measurement periodicity is determined based on the SMTC periodicity, the periodicity of the NCSG (for example, the VIRP), and the quantity of measurement frequencies for the NCSG that are configured by the network device.

For the scenario shown in FIG. 3B, an intra-frequency measurement process without measurement gap may be implemented with reference to the following S607.

S607: When all of measurement opportunities of the second SMTC are covered by the measurement period of the NCSG, the terminal device performs intra-frequency measurement without measurement gap based on a fourth intra-frequency measurement periodicity.

It may be understood that the terminal device may determine, based on the resource configuration information for the second SMTC and the resource configuration information for the NCSG, whether all of the measurement opportunities of the second SMTC are covered by the measurement period of the NCSG.

The fourth intra-frequency measurement periodicity may be determined based on at least the periodicity of the second SMTC, a seventh scaling factor, and an eighth scaling factor, where the seventh scaling factor is 1, and the eighth scaling factor is determined based on N and the quantity of measurement frequencies for the NCSG. For example, the fourth intra-frequency measurement periodicity is determined based on the SMTC periodicity, Kp, and a CSSF. The SMTC periodicity is the periodicity of the second SMTC. Kp is the seventh scaling factor, in other words, Kp=1.

The CSSF is the eighth scaling factor, and the CSSF is determined based on N and the quantity (P) of measurement frequencies for the NCSG. For example, when all of measurement opportunities of a first SMTC corresponding to the PCC are also covered by the measurement period of the NCSG, the CSSF is equal to N+P. Correspondingly, when the NCSG-based measurement periodicity is calculated, a quantity of SCCs and the quantity of measurement frequencies for the NCSG also need to be considered. The NCSG-based measurement periodicity may be determined based on the SMTC periodicity, the periodicity of the NCSG (for example, the VIRP), and the CSSF (N+P) that are configured by the network device. For another example, when all of measurement opportunities of a first SMTC corresponding to the PCC partially overlap with the measurement period of the NCSG, the CSSF is equal to N+1+P. Correspondingly, when the NCSG-based measurement periodicity is calculated, a quantity of PCCs, a quantity of SCCs, and the quantity of measurement frequencies for the NCSG also need to be considered. The NCSG-based measurement periodicity may be determined based on the SMTC periodicity, the periodicity of the NCSG (for example, the VIRP), and the CSSF (N+1+P) that are configured by the network device.

Similarly, in Example 2, for the scenario shown in FIG. 3C, when the part of measurement opportunities of the first SMTC and the part of measurement opportunities of the second SMTC partially overlap with the measurement period of the NCSG, Kp used to calculate the intra-frequency measurement periodicity for the SCC is equal to 1/(1-SMTC periodicity/VIRP). The CSSF is determined based on N and the quantity of measurement frequencies for the NCSG. Correspondingly, when the NCSG-based measurement periodicity is calculated, the quantity of measurement frequencies for the NCSG and the quantity of measurement frequencies for the intra-frequency SMTC for the SCC need to be considered. For example, the NCSG-based measurement periodicity is determined based on the SMTC periodicity, the periodicity of the NCSG (for example, the VIRP), and the CSSF for the SCC that are configured by the network device.

In Example 2, for the scenario shown in FIG. 3D, Kp used to calculate the intra-frequency measurement periodicity for the SCC is equal to 1, and the CSSF is determined based on N and the quantity (P) of measurement frequencies for the NCSG. For example, when all of the measurement opportunities of the first SMTC and all of the measurement opportunities of the second SMTC partially overlap with the measurement period of the NCSG, the CSSF is equal to 1+N+P. The NCSG-based measurement periodicity is determined based on the SMTC periodicity, the periodicity of the NCSG (for example, the VIRP), and the CSSF (1+N+P) for the SCC that are configured by the network device. For another example, when all of the measurement opportunities of the second SMTC partially overlap with the measurement period of the NCSG, but all of the measurement opportunities of the first SMTC are covered by the measurement period of the NCSG, the CSSF is equal to N+P. The NCSG-based measurement periodicity is determined based on the SMTC periodicity, the periodicity of the NCSG (for example, the VIRP), and the CSSF (N+P) for the SCC that are configured by the network device.

S608: The terminal device reports a corresponding measurement result to the network device.

It may be understood that the measurement result includes a result of the intra-frequency measurement without measurement gap that is performed by the terminal device on the SCC in S605/S606/S607. Corresponding to S605, the terminal device reports a second measurement result, and the second measurement result is a result of the intra-frequency measurement without measurement gap that is performed based on the second intra-frequency measurement periodicity. Alternatively, corresponding to S606, the terminal device reports a third measurement result, and the third measurement result is a result of the intra-frequency measurement without measurement gap that is performed based on the third intra-frequency measurement periodicity. Alternatively, corresponding to S607, the terminal device reports a fourth measurement result, and the fourth measurement result is a result of the intra-frequency measurement without measurement gap that is performed based on the fourth intra-frequency measurement periodicity.

In addition, optionally, in the measurement period of the NCSG, the network device may further perform data transmission with the terminal device by using a serving cell, for example, send downlink data and/or receive uplink data. Correspondingly, in the measurement period of the NCSG, the terminal device may also perform data transmission with the serving cell, for example, receive downlink data and/or send uplink data.

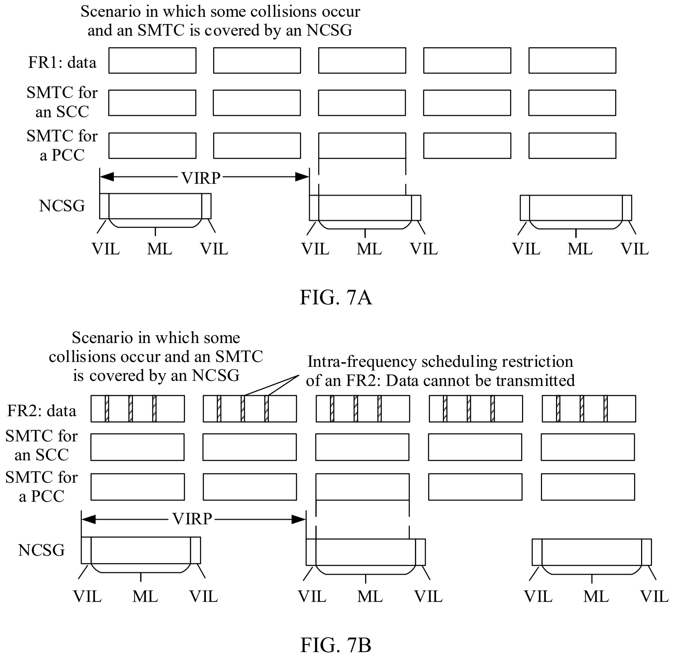

In a possible design, when a frequency at which the serving cell is located is in a frequency range 1 (frequency range 1, FR1), and there is no intra-frequency scheduling restriction and no inter-frequency scheduling restriction, S609 may be further performed in the measurement method shown in FIG. 6: The network device performs data transmission with the terminal device by using the serving cell in the measurement period of the NCSG. It may be understood that S609 and S605/S606/S607 may be performed in parallel. In an example, based on FIG. 3A, FIG. 7A shows that in an FR1 scenario, in addition to supporting intra-frequency measurements without measurement gaps on the PCC and the SCC in the measurement period of the NCSG, normal data transmission in all time of the measurement period of the NCSG is supported.

In another possible design, a frequency at which the serving cell is located is in a frequency range 2 (frequency range 2, FR2), the intra-frequency measurement without measurement gap includes intra-frequency measurement in the FR2, and inter-frequency measurement performed within the NCSG may be RRM measurement at an inter frequency in the FR1. S610 may be further performed in the measurement method shown in FIG. 4: The network device performs data transmission with the terminal device by using the serving cell in the measurement period of the NCSG based on intra-frequency scheduling restriction information corresponding to the FR2. Correspondingly, the terminal device may also perform data transmission with the serving cell in the measurement period of the NCSG based on the intra-frequency scheduling restriction information corresponding to the FR2. It may be understood that S610 and S605/S606/S607 may be performed in parallel. Optionally, the intra-frequency scheduling restriction information corresponding to the FR2 includes: skipping performing data transmission in measurement time of an SSB in a measurement opportunity of the SMTC. In an example, based on FIG. 3A, FIG. 7B shows that in an FR2 scenario, in addition to supporting intra-frequency measurements without measurement gaps on the PCC and the SCC in the measurement period of the NCSG, performing data transmission is further supported in a part of time of the measurement period of the NCSG based on the intra-frequency scheduling restriction information corresponding to the FR2.

In addition, optionally, if the terminal device does not support an IntraMeasInNCSG capability, or the terminal device does not support an SCCMeasInNCSG capability, or a value of MeasChanNumInNCSG supported by the terminal device is less than or equal to 2, or there is a related intra-frequency scheduling restriction, the quantity of measurement frequencies for the SMTC and the quantity of measurement frequencies for the NSCG need to be considered for both an intra-frequency measurement periodicity without measurement gap on the SCC and the NCSG-based measurement periodicity. Alternatively, it may be understood that the intra-frequency CSSF for the SCC needs to be calculated together with the quantity of measurement frequencies for the NCSG.

It may be understood that, for different communication scenarios, Solution 1 or Solution 2 may be separately implemented, or Solution 1 and Solution 2 may be implemented together. This is not limited in embodiments of this application. In addition, in the foregoing embodiments, the terminal device and/or the network device may perform some or all of the steps in embodiments. These steps or operations are merely examples. In embodiments of this application, other operations or variations of various operations may be further performed. In addition, the steps may be performed in a sequence different from a sequence shown in embodiments, and not all of operations in embodiments of this application may be performed. In addition, sequence numbers of the processes do not mean a sequence of performing the processes. The sequence of performing the processes should be determined based on functions and internal logic of the processes, and should not be construed as any limitation on the implementation processes of embodiments of this application.

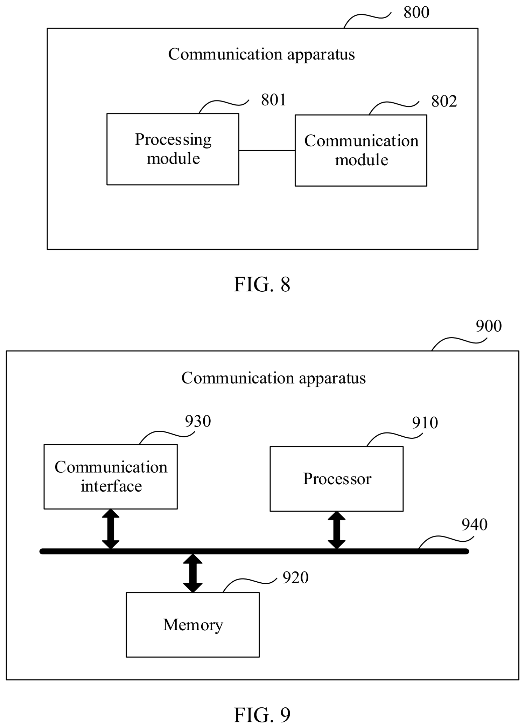

Based on a same concept, refer to FIG. 8. An embodiment of this application provides a communication apparatus 800. The communication apparatus 800 includes a processing module 801 and a communication module 802. The communication apparatus 800 may be a terminal device, or may be a communication apparatus that is used in the terminal device or that is used in matching with the terminal device and that can implement the communication method performed on a terminal device side. Alternatively, the communication apparatus 800 may be a network device, or may be a communication apparatus that is used in the network device or that is used in matching with the network device and that can implement the communication method performed by the network device.

The communication module may also be referred to as a transceiver module, a transceiver, a transceiver apparatus, or the like. The processing module may also be referred to as a processor, a processing board, a processing unit, a processing apparatus, or the like. Optionally, the communication module is configured to perform a sending operation and a receiving operation on the terminal device side or a network device side in the foregoing method. A component configured to implement a receiving function in the communication module may be considered as a receiving unit, and a component configured to implement a sending function in the communication module may be considered as a sending unit. In other words, the communication module includes the receiving unit and the sending unit.

When the communication apparatus 800 is used in the terminal device, the processing module 801 may be configured to implement a processing function of the terminal device in the example in FIG. 4 or FIG. 6, and the communication module 802 may be configured to implement receiving and sending functions of the terminal device in the example in FIG. 4 or FIG. 6. Optionally, the communication apparatus may alternatively be understood with reference to the third aspect and the possible designs in the third aspect in the summary.

When the communication apparatus 800 is used on the network device side, the processing module 801 may be configured to implement a processing function of the network device in the example in FIG. 4 or FIG. 6, and the communication module 802 may be configured to implement receiving and sending functions of the network device in the example in FIG. 4 or FIG. 6. Optionally, the communication apparatus may alternatively be understood with reference to the fourth aspect and the possible designs in the fourth aspect in the summary.

In addition, it should be noted that, in a possible design, the communication module and/or the processing module may be implemented by using a virtual module. For example, the processing module may be implemented by using a software functional unit or a virtual apparatus, and the communication module may be implemented by using a software function or a virtual apparatus. In another possible design, the processing module or the communication module may alternatively be implemented by using a physical apparatus. For example, if the apparatus is implemented by using a chip/chip circuit, the communication module may be an input/output circuit and/or a communication interface, and performs an input operation (corresponding to the receiving operation) and an output operation (corresponding to the sending operation). The processing module is an integrated processor, a microprocessor, or an integrated circuit.

In embodiments of this application, division into modules is an example, and is merely logical function division. In actual implementation, another division manner may be used. In addition, functional modules in the examples in embodiments of this application may be integrated into one processor, or each of the modules may exist alone physically, or two or more modules are integrated into one module. The integrated module may be implemented in a form of hardware, or may be implemented in a form of a software functional module.

Based on a same technical concept, an embodiment of this application further provides a communication apparatus 900. For example, the communication apparatus 900 may be a chip or a chip system. Optionally, in embodiments of this application, the chip system may include a chip, or may include a chip and another discrete component.

The communication apparatus 900 may be configured to implement a function of any network element in the communication system described in the foregoing example. The communication apparatus 900 may include at least one processor 910. Optionally, the processor 910 is coupled to a memory, and the memory may be located in the apparatus; or the memory may be integrated with the processor; or the memory may be located outside the apparatus. For example, the communication apparatus 900 may further include at least one memory 920. The memory 920 stores a computer program, a computer program or instructions, and/or data necessary for implementing any one of the foregoing examples. The processor 910 may execute the computer program stored in the memory 920, to complete the method in any one of the foregoing examples.

The communication apparatus 900 may further include a communication interface 930. The communication apparatus 900 may exchange information with another device through the communication interface 930. For example, the communication interface 930 may be a transceiver, a circuit, a bus, a module, a pin, or a communication interface of another type. When the communication apparatus 900 is a chip-type apparatus or circuit, the communication interface 930 in the apparatus 900 may alternatively be an input/output circuit, and may input information (or referred to as receiving information) and output information (or referred to as sending information). The processor is an integrated processor, a microprocessor, an integrated circuit, or a logic circuit, and the processor may determine output information based on input information.

The coupling in embodiments of this application may be an indirect coupling or a communication connection between apparatuses, units, or modules in an electrical form, a mechanical form, or another form, and is used for information exchange between the apparatuses, the units, or the modules. The processor 910 may operate in collaboration with the memory 920 and the communication interface 930. In embodiments of this application, a specific connection medium among the processor 910, the memory 920, and the communication interface 930 is not limited.

Optionally, refer to FIG. 9. The processor 910, the memory 920, and the communication interface 930 are connected to each other through a bus 940. The bus 940 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 9, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams in embodiments of this application. The general-purpose processor may be a microprocessor or any conventional processor or the like. The steps of the method in embodiments of this application may be directly completed by a hardware processor, or may be completed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be configured to carry or store expected program code in a form of an instruction or a data structure and that can be accessed by a computer, but is not limited thereto. The memory in embodiments of this application may alternatively be a circuit or any other apparatus that can implement a storage function, and is configured to store program instructions and/or data.

In a possible implementation, the communication apparatus 900 may be used in a terminal device. Specifically, the communication apparatus 900 may be the terminal device, or may be an apparatus that can support the terminal device in implementing a function of the terminal device in any one of the foregoing examples. The memory 920 stores a computer program (or instructions) and/or data for implementing the function of the terminal device in any one of the foregoing examples. The processor 910 may execute the computer program stored in the memory 920, to complete the method performed by the terminal device in any one of the foregoing examples. For example, when the communication apparatus is used in the terminal device, the communication interface in the communication apparatus 900 may be configured to interact with a network device, and send information to the network device or receive information from the network device.

In another possible implementation, the communication apparatus 900 may be used in a network device. Specifically, the communication apparatus 900 may be the network device, or may be an apparatus that can support the network device in implementing a function of the network device in any one of the foregoing examples. The memory 920 stores a computer program (or instructions) and/or data for implementing a function of the network device in any one of the foregoing examples. The processor 910 may execute the computer program stored in the memory 920, to complete the method performed by the network device in any one of the foregoing examples. For example, when the communication apparatus is used in the network device, the communication interface in the communication apparatus 900 may be configured to interact with a terminal device, and send information to the terminal device or receive information from the terminal device.

The communication apparatus 900 provided in this example may be used in the network device to complete the method performed by the cell on the network device side, or may be used in the terminal device to complete the method performed by the terminal device. Therefore, for technical effect that can be achieved by the communication apparatus 900, refer to the foregoing method examples. Details are not described herein again.

All or some of the technical solutions provided in embodiments of this application may be implemented by using software, hardware, firmware, or any combination thereof. When the embodiments are implemented by using software, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, a terminal device, a network device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device like a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, on the premise that there is no logical contradiction, the examples may be mutually referenced. For example, the methods and/or the terms in the method embodiments may be mutually referenced. For example, the functions and/or the terms in apparatus embodiments may be mutually referenced. For example, the functions and/or the terms between the apparatus example and the method example may be mutually referenced.

It is clear that a person skilled in the art can make various modifications and variations to embodiments of this application without departing from the scope of embodiments of this application. In this way, embodiments of this application are intended to cover these modifications and variations of embodiments of this application provided that they fall within the scope of protection defined by the claims of embodiments of this application and equivalent technologies thereof.

## Claims

1. A measurement method, comprising:
sending first capability information, wherein the first capability information indicates that a terminal device supports performing intra-frequency measurement without measurement gap in a measurement period of a network controlled small gap NCSG;
obtaining resource configuration information for a first synchronization signal block measurement timing configuration SMTC and resource configuration information for the NCSG; and
when a part or all of measurement opportunities of the first SMTC are covered by the measurement period of the NCSG, performing intra-frequency measurement without measurement gap based on a first intra-frequency measurement periodicity, wherein the first intra-frequency measurement periodicity is determined based on at least a periodicity of the first SMTC, a first scaling factor, and a second scaling factor, and the first scaling factor and the second scaling factor are 1.

2. The method according to claim 1, wherein the intra-frequency measurement without measurement gap that is indicated in the first capability information comprises intra-frequency measurement corresponding to a primary component carrier, and the first SMTC is an SMTC for the primary component carrier.

3. The method according to claim 2, wherein the intra-frequency measurement without measurement gap that is indicated in the first capability information further comprises intra-frequency measurement corresponding to a secondary component carrier, and the method further comprises:
sending second capability information, wherein the second capability information indicates a quantity M of radio frequency channels simultaneously measurable by the terminal device, and M is a positive integer greater than or equal to 2.

4. The method according to claim 3, wherein when M is greater than 2, the method further comprises:
obtaining resource configuration information for a second SMTC, wherein the second SMTC is an SMTC for one of N secondary component carriers, and N is a positive integer; and
when a part or all of measurement opportunities of the second SMTC are covered by the measurement period of the NCSG, performing intra-frequency measurement without measurement gap based on a second intra-frequency measurement periodicity, wherein the second intra-frequency measurement periodicity is determined based on at least a periodicity of the second SMTC, a third scaling factor, and a fourth scaling factor, the third scaling factor is 1, and the fourth scaling factor is determined based on N and M.

5. The method according to claim 4, wherein when M is 3, a value of the fourth scaling factor is N.

6. The method according to claim 3, wherein when M is equal to 2, the method further comprises:
obtaining resource configuration information for a second SMTC, wherein the second SMTC is an SMTC for one of N secondary component carriers, and N is a positive integer; and
when a part of measurement opportunities of the second SMTC are covered by the measurement period of the NCSG, performing intra-frequency measurement without measurement gap based on a third intra-frequency measurement periodicity, wherein the third intra-frequency measurement periodicity is determined based on at least a periodicity of the second SMTC, a fifth scaling factor, and a sixth scaling factor, the fifth scaling factor is determined based on the periodicity of the second SMTC and a periodicity of the NCSG, and the sixth scaling factor is N; or
when all of measurement opportunities of the second SMTC are covered by the measurement period of the NCSG, performing intra-frequency measurement without measurement gap based on a fourth intra-frequency measurement periodicity, wherein the fourth intra-frequency measurement periodicity is determined based on at least a periodicity of the second SMTC, a seventh scaling factor, and an eighth scaling factor, the seventh scaling factor is 1, and the eighth scaling factor is determined based on N and a quantity of measurement frequencies for the NCSG.

7. The method according to any one of claims 1 to 6, further comprising:
receiving first indication information, wherein the first indication information indicates that the intra-frequency measurement without measurement gap is allowed to be performed in the measurement period of the NCSG.

8. The method according to any one of claims 1 to 7, wherein the method further comprises:
performing data transmission with a serving cell in the measurement period of the NCSG, wherein a frequency at which the serving cell is located is in a frequency range FR1.

9. The method according to any one of claims 1 to 8, wherein the method further comprises:
performing data transmission with a serving cell in the measurement period of the NCSG based on intra-frequency scheduling restriction information corresponding to a frequency range FR2, wherein a frequency at which the serving cell is located is in the FR2.

10. A measurement method, comprising:
receiving first capability information, wherein the first capability information indicates that a terminal device supports performing intra-frequency measurement without measurement gap in a measurement period of a network controlled small gap NCSG;
sending resource configuration information for a first synchronization signal block measurement timing configuration SMTC and resource configuration information for the NCSG; and
when a part or all of measurement opportunities of the first SMTC are covered by the measurement period of the NCSG, receiving a first measurement result, wherein the first measurement result is a result of intra-frequency measurement without measurement gap that is performed based on a first intra-frequency measurement periodicity, the first intra-frequency measurement periodicity is determined based on at least a periodicity of the first SMTC, a first scaling factor, and a second scaling factor, and the first scaling factor and the second scaling factor are 1.

11. The method according to claim 10, wherein the intra-frequency measurement without measurement gap that is indicated in the first capability information comprises intra-frequency measurement corresponding to a primary component carrier, and the first SMTC is an SMTC for the primary component carrier.

12. The method according to claim 11, wherein the intra-frequency measurement without measurement gap that is indicated in the first capability information further comprises intra-frequency measurement corresponding to a secondary component carrier, and the method further comprises:
receiving second capability information, wherein the second capability information indicates a quantity M of radio frequency channels simultaneously measurable by the terminal device, and M is a positive integer greater than or equal to 2.

13. The method according to claim 12, wherein when M is greater than 2, the method further comprises:
sending resource configuration information for a second SMTC, wherein the second SMTC is an SMTC for one of N secondary component carriers, and N is a positive integer; and
when a part or all of measurement opportunities of the second SMTC are covered by the measurement period of the NCSG, receiving a second measurement result, wherein the second measurement result is a result of intra-frequency measurement without measurement gap that is performed based on a second intra-frequency measurement periodicity, the second intra-frequency measurement periodicity is determined based on at least a periodicity of the second SMTC, a third scaling factor, and a fourth scaling factor, the third scaling factor is 1, and the fourth scaling factor is determined based on N and M.

14. The method according to claim 13, wherein when M is 3, a value of the fourth scaling factor is N.

15. The method according to claim 12, wherein when M is equal to 2, the method further comprises:
sending resource configuration information for a second SMTC, wherein the second SMTC is an SMTC for one of N secondary component carriers, and N is a positive integer; and
when a part of measurement opportunities of the second SMTC are covered by the measurement period of the NCSG, receiving a third measurement result, wherein the third measurement result is a result of intra-frequency measurement without measurement gap that is performed based on a third intra-frequency measurement periodicity, the third intra-frequency measurement periodicity is determined based on at least a periodicity of the second SMTC, a fifth scaling factor, and a sixth scaling factor, the fifth scaling factor is determined based on the periodicity of the second SMTC and a periodicity of the NCSG, and the sixth scaling factor is N; or
when all of measurement opportunities of the second SMTC are covered by the measurement period of the NCSG, receiving a fourth measurement result, wherein the fourth measurement result is a result of intra-frequency measurement without measurement gap that is performed based on a fourth intra-frequency measurement periodicity, the fourth intra-frequency measurement periodicity is determined based on at least a periodicity of the second SMTC, a seventh scaling factor, and an eighth scaling factor, the seventh scaling factor is 1, and the eighth scaling factor is determined based on N and a quantity of measurement frequencies for the NCSG.

16. The method according to any one of claims 10 to 15, further comprising:
sending first indication information, wherein the first indication information indicates that the terminal device is allowed to perform intra-frequency measurement without measurement result in the measurement period of the NCSG.

17. The method according to any one of claims 10 to 16, further comprising:
performing data transmission with the terminal device by using a serving cell in the measurement period of the NCSG, wherein a frequency at which the serving cell is located is in a frequency range FR1.

18. The method according to any one of claims 10 to 16, wherein the method further comprises:
performing, based on intra-frequency scheduling restriction information corresponding to a frequency range FR2, data transmission with the terminal device by using a serving cell in the measurement period of the NCSG, wherein a frequency at which the serving cell is located is in the FR2.

19. A communication apparatus, configured to implement the method according to any one of claims 1 to 9, or configured to implement the method according to any one of claims 10 to 18.

20. A communication apparatus, comprising:
a processor, wherein the processor is coupled to a memory, and the processor is configured to invoke computer program instructions stored in the memory, to perform the method according to any one of claims 1 to 9, or perform the method according to any one of claims 10 to 18.

21. A communication system, comprising: a communication apparatus configured to perform the method according to any one of claims 1 to 9, and a communication apparatus configured to perform the method according to any one of claims 10 to 18.

22. A computer-readable storage medium, wherein the computer-readable storage medium stores instructions, and when the instructions are run on a computer, the computer is enabled to perform the method according to any one of claims 1 to 9 or perform the method according to any one of claims 10 to 18.

23. A computer program product, comprising instructions, wherein when the instructions are run on a computer, the computer is enabled to perform the method according to any one of claims 1 to 9 or perform the method according to any one of claims 10 to 18.

24. A chip, configured to read a computer program stored in a memory, to perform the method according to any one of claims 1 to 9 or perform the method according to any one of claims 10 to 18.
